# EUROPÄISCHE PATENTANMELDUNG

(11) **EP 2 633 793 A1**
(43) Veröffentlichungstag der Anmeldung: **04.09.2013**
(21) Anmeldenummer: 12196952.1
(22) Anmeldetag: 13.12.2012
(51) Int. Cl.: A47L 9/16, A47L 9/20, B01D 46/00, B01D 46/26, B01D 50/00, B01D 46/24

(54) **Filtervorrichtung, Verfahren und Computerprogramm zum Filtern von Partikeln**

(30) Priorität: 19.12.2011 DE 102011088965
(71) Anmelder: BSH Bosch und Siemens Hausgeräte GmbH, 81739 München (DE)
(72) Erfinder: Bach, Benedikt, 97702 Münnerstadt (DE); Böck, Armin, 97633 Großbardorf (DE); Husnik, Stephan, 97618 Hohenroth (DE); Kleinhenz, Albert, 97659 Schönau a.d.Brend (DE); Rink, Melinda, 98646 Zeilfeld (DE); Seith, Thomas, 97616 Bad Neustadt (DE); Storath, Martin, 97688 Bad Kissingen (DE); Ullrich, Christian, 97519 Riedbach (DE)

(57) **Zusammenfassung**

Eine Filtervorrichtung 100, ein Verfahren und ein Computerprogramm zum Filtern von Partikeln aus einem Luftstrom für ein Bodenpflegegerät mit einer Reinigungseinrichtung 10 und einer Feinfiltereinrichtung 20, wobei die Feinfiltereinrichtung 20 der Reinigungseinrichtung 10 im Luftstrom nachgeschaltet ist und wobei die Reinigungseinrichtung 10 gegenüber der Feinfiltereinrichtung 20 drehbar über ein Lager 30 gelagert ist.

## Beschreibung

Die vorliegende Erfindung betrifft eine Filtervorrichtung, ein Verfahren und ein Computerprogramm zum Filtern von Partikeln aus einem Luftstrom für ein Bodenpflegegerät.

Aus dem Stand der Technik sind vielerlei Bodenpflegegeräte bekannt. Im Bereich der Staubsauger werden zwei grundlegende Konstruktionsprinzipien unterschieden. Einerseits wird von dem Prinzip eines Beutelstaubsaugers ausgegangen, bei dem ein angesaugter Luftstrom durch einen Staubbeutel gefiltert wird, sodass der Staub in dem Beutel verbleibt und der Luftstrom so gereinigt wird. Andererseits ist das Prinzip von Zyklon- oder Drallabscheidern bekannt, bei denen ein angesaugter Luftstrom in einen Wirbel geleitet wird, wobei Staubpartikel durch die entstehenden Fliehkräfte nach außen gedrückt werden und gereinigte Luft im Innern des Wirbels, gegebenenfalls nach anschließender Feinfilterung, entnommen wird.

Bekannt sind Abscheider, deren staubbeaufschlagte nachgeschaltete Filter dann per Hand, z.B. mit einem Pinsel, durch Ausklopfen, Ausblasen, Auswaschen, o.ä., gereinigt werden müssen, um die Saugleistung wieder zu erhalten. Weiterhin sind Geräte bekannt, bei denen über einen Mechanismus oder einem elektrischen Antrieb die Reinigung der Filter, ebenfalls durch Abklopfen, Abrütteln, etc., durchgefühlt wird. Eine andere Art der Filterreinigung wird durch doppelt ausgebildete Filterkartuschen realisiert, die wechselweise in den Saugstrom gesetzt werden und so die Saugleistungskonstanz gewährleisten sollen.

Die Druckschrift DE 100 35 253 A1 beschreibt einen Zyklon-Staubsauger bei dem ein sich im Luftstrom drehendes Filter zur Anwendung kommt. Das Filter ist dabei gegenüber dem Gehäuse des Staubsaugers auf einem Kugelkranz gelagert und umfasst mehrere Drehflügel, die das Filter mit der Luftströmung drehen.

In der Druckschrift EP 1574 160 A1 wird ein Zyklon-Staubsauger beschrieben, dessen Filter über einen Bürstenring gereinigt wird. Der Bürstenring umfasst dabei Drehflügel, die den Bürstenring im Luftstrom antreiben und entlang des Filters in axialer Richtung bewegen.

Der Erfindung liegt die Aufgabe zugrunde, ein verbessertes Konzept für eine Filtervorrichtung eines Bodenpflegegerätes zu schaffen.

Die Lösung der gestellten Aufgabe gelingt durch eine Filtervorrichtung, ein Verfahren und ein Computerprogramm mit den Merkmalen der anhängigen unabhängigen Ansprüche.

Vorteilhafte Aus- und Weiterbildungen, welche einzeln oder in Kombination miteinander eingesetzt werden können, sind Gegenstand der abhängigen Ansprüche. Die Bezugszeichen in den Ansprüchen haben keine einschränkende Wirkung, sondern sollen lediglich deren Lesbarkeit verbessern.

Es ist ein Kerngedanke von Ausführungsbeispielen die Effizienz eines Bodenpflegegerätes durch eine Filtervorrichtung mit einer zusätzlichen Reinigungseinrichtung zu erhöhen, wobei die zusätzliche Reinigungseinrichtung gegenüber einer Feinfiltereinrichtung rotiert. In anderen Worten ist für die zusätzliche Reinigungseinrichtung ein entsprechendes Lager vorgesehen, so dass sich die zusätzliche Reinigungseinrichtung um eine Feinfiltereinrichtung herum drehen kann.

Ausführungsbeispiele können beispielsweise durch die Anordnung eines rotierenden Filters in der Mitte eines Drallabscheiders (Zyklon, Fliehkraftabscheider) die Abscheideleistung eines beutellosen Staubsaugers zu erhöhen und gleichzeitig die Verstopfungsneigung des nachgeschalteten Filtersystems, wie z.B. einer Feinfiltereinrichtung, erniedrigen. Durch den Einsatz eines rotierenden Filters, der mit entsprechender Filterfläche und entsprechendem Filtermaterial ausgestattet ist, kann eine Erhöhung der Abscheidung des Feinstaubes erreicht werden. Außerdem kann durch eine ständige Drehbewegung ein Zusetzen der Filterfläche des rotierenden Filters mit Haaren, Flusen, o.ä., durch die wirkenden Fliehkräfte vermindert werden. Eine händische Reinigung des Flusensiebes oder anderer dem Abscheider nachgeschalteter Filter kann in Ausführungsbeispielen unter Umständen ganz entfallen. Darüber hinaus können Ausführungsbeispiele dazu beitragen, dass eine Saugleistungskonstanz eines Bodenpflegegerätes erhalten bleibt.

Ausführungsbeispiele stellen daher eine Filtervorrichtung zum Filtern von Partikeln aus einem Luftstrom für ein Bodenpflegegerät bereit. Die Filtervorrichtung umfasst eine Reinigungseinrichtung und eine Feinfiltereinrichtung, wobei die Feinfiltereinrichtung der Reinigungseinrichtung im Luftstrom nachgeschaltet ist und wobei die Reinigungseinrichtung gegenüber der Feinfiltereinrichtung drehbar über ein Lager gelagert ist. Insbesondere die Lagerung kann in Ausführungsbeispielen dafür sorgen, dass die Rotation der Reinigungseinrichtung definiert und leichtgängig erfolgen kann. Dies kann beispielsweise eine Abdichtung ermöglichen, so dass die Reinigungseinrichtung in Ausführungsbeispielen als Vorfilterstufe für die Feinfiltereinrichtung dienen kann. Die Feinfiltereinrichtung kann beispielsweise als Filterkartusche (auch engl. Cartridge) oder als hocheffizienter Partikelfilter (auch engl. High Efficiency Particulate Airfilter, HEPA-Filter) ausgebildet sein.

Die Reinigungseinrichtung kann in Ausführungsbeispielen einer Grobfiltereinrichtung entsprechen, die gegenüber der Feinfiltereinrichtung zum Filtern größerer Partikel ausgebildet ist. In anderen Worten kann die Grobfiltereinrichtung z.B. zum Ausfiltern größerer Schmutzpartikel, wie z.B. Flusen, Haaren usw., ausgelegt sein, wobei ein Festsetzen dieser Grobpartikel an der Grobfiltereinrichtung durch die Rotation der Grobfiltereinrichtung vermindert werden kann. Die Grobfiltereinrichtung kann demnach einem rotierenden Flusensieb entsprechen. Die so vorgereinigte Luft kann dann der Feinfiltereinrichtung zugeführt werden, die dann wiederum zum Ausfiltern kleinerer Schmutzpartikel, wie z.B. Staub, Pollen, etc. ausgelegt ist. Insofern wird deutlich, dass die Grobfiltereinrichtung gröbere Schmutzpartikel von der Feinfiltereinrichtung fern hält und so deren Lebensdauer und Saugleistungskonstanz verlängern kann. Die Grobreinigungseinrichtung selbst kann dann als in gewissem Maße selbstreinigend verstanden werden, zumal diese, durch die Rotation, ein Festsetzen der Großpartikel verhindert. Die Großpartikel werden dann spätestens nach Abschalten des Luftstromes zu Boden bzw. in einen dafür vorgesehenen Schmutzbehälter absinken. In anderen Ausführungsbeispielen können auch Feinfilter als Drehfilter verwendet werden, so dass eine zweistufige Feinfilterung entsteht.

In weiteren Ausführungsbeispielen kann die Reinigungseinrichtung ein Reinigungselement für die Feinfiltereinrichtung umfassen. Das Reinigungselement kann dabei ausgebildet sein, um durch Rotieren um die Feinfiltereinrichtung herum Partikel von der Feinfiltereinrichtung zu entfernen. In anderen Worten kann die Reinigungseinrichtung auch ausgebildet sein, um die Feinfiltereinrichtung direkt zu reinigen. Dies kann ebenfalls im Rahmen einer Rotation um die Feinfiltereinrichtung herum erfolgen. Beispielsweise kann die Reinigungseinrichtung Stege oder Paddel umfassen, die über die Oberfläche der Feinfiltereinrichtung gleiten und so Schmutzpartikel lösen. Dies kann beispielsweise durch ein Ausbürsten oder auch durch Erzeugen von Vibrationen erfolgen. Z.B. kann die Feinfiltereinrichtung eine unebene Oberfläche aufweisen, beispielsweise lamellenförmig, zickzackförmig, sinusförmig, o.ä., sodass durch ein darüber gleitendes Paddel oder ein darüber gleitender Steg der Reinigungseinrichtung eine entsprechende Vibration der Feinfiltereinrichtung erzeugbar ist. Die Reinigungseinrichtung kann ausgebildet sein, um nach einem Abschalten des Luftstroms um die Feinfiltereinrichtung herum zu rotieren. In anderen Worten kann die Filtervorrichtung vorsehen, die Reinigungseinrichtung nach dem Abschalten des Luftstroms anzutreiben, beispielsweise mittels eines elektrischen Antriebs.

In einem Ausführungsbeispiel kann ein Energiespeicher, wie z.B. ein Kondensator oder ein Akkumulator vorgesehen sein, der nach Abschalten des Bodenpflegegerätes oder des Staubsaugers Energie für die Rotation der Reinigungseinrichtung liefert. Somit kann nach dem Abschalten die Feinfiltereinrichtung ausgebürstet oder ausgeklopft werden, sodass sich deren Lebensdauer und so deren Saugleistungskonstanz verlängern kann. Insofern hält auch in diesen Ausführungsbeispielen die Reinigungseinrichtung die Feinfiltereinrichtung von Schmutzpartikeln frei.

Ferner kann in Ausführungsbeispielen, insbesondere wenn die Reinigungseinrichtung als Grobfiltereinrichtung oder Drehfilter ausgebildet ist, eine wirksame Abdichtung des Drehfilters zum nachgeschalteten Feinfilter durch eine Gleitdichtung erreicht werden. Eine Dichtung kann in Ausführungsbeispielen verhindern, dass sich der Feinfilter mit grobem Staub vorzeitig zusetzt und es zum Ausfall des Systems kommt. Die Reinigungseinrichtung und die Feinfiltereinrichtung können insofern gegeneinander durch eine Gleitdichtung abgedichtet sein. In Ausführungsbeispielen kann die Dichtung mindestens so dicht sein, wie die Durchlässigkeit des Drehfilters. In anderen Worten kann die Dichtung so ausgelegt werden, dass sie Partikel die der Drehfilter nicht auszufiltern vermag, ebenfalls nicht abhält. Andererseits sollte die Dichtung Partikel, die der Drehfilter ausfiltert nicht durchlassen. Darüber hinaus kann die Dichtung in Ausführungsbeispielen schmutzunempfindlich ausgebildet sein. Ferner kann die Dichtung unterdruckstabil sein, d.h. derart ausgeführt sein, dass der Unterdruck im Inneren des Drehfilters gegenüber dem Äußeren des Drehfilters dazu führt, dass die Dichtung weiter abdichtet und dem Unterdruck nicht bis zu einer Undichte nachgibt.

Darüber hinaus kann die Dichtung in Ausführungsbeispielen eine geringe Haft- und Gleitreibung aufweisen und geringen Verschleiß zeigen, was beispielsweise durch Verwendung von Stahl und Teflon erreicht werden kann. Die Gleitdichtung kann darüber hinaus als Labyrinth-Dichtung ausgeführt sein. In Ausführungsbeispielen kann die Gleitdichtung ein oder mehrere Rippen aufweisen, die Schmutz von einer Dichtfläche weg fördert. In anderen Worten kann die Dichtfläche eine Struktur aufweisen, die unter Rotation etwaige Schmutzpartikel vom Inneren der Grobfiltereinrichtung weg fördert.

In weiteren Ausführungsbeispielen kann die Filtervorrichtung eine in den Luftstrom zwischen die Reinigungseinrichtung und die Feinfiltereinrichtung geschaltete Zwischenfiltereinrichtung umfassen. In anderen Worten kann die Filtervorrichtung auch Drei- oder mehrstufig ausgeführt sein. Dabei kann die Reinigungseinrichtung zuerst oder als erste Stufe in dem Luftstrom angeordnet sein und mit Reinigungselementen (Stege, Paddel) und/oder als Drehfilter ausgeführt sein. In manchen Ausführungsbeispielen kann insofern beides der Fall sein, d.h. die Reinigungseinrichtung ist um die Zwischenfiltereinrichtung herum drehbar und umfasst ferner ein Reinigungselement für die Zwischenfiltereinrichtung, das ausgebildet ist, um durch Rotieren um die Zwischenfiltereinrichtung herum Partikel von der Zwischenfiltereinrichtung zu entfernen. Insofern kann die Oberfläche der Zwischenfiltereinrichtung ausführt sein wie die oben beschriebene Oberfläche der Feinfiltereinrichtung. Bei den Reinigungselementen kann es sich wiederum um Stege oder Paddel handeln. Die Reinigungseinrichtung kann ausgebildet sein, um nach einem Abschalten des Luftstroms um die Zwischenfiltereinrichtung zu rotieren. In anderen Worten kann vorgesehen sein, dass die Zwischenfiltereinrichtung nach Abschalten des Luftstromes durch die Reinigungselemente gereinigt wird, in der gleichen Weise wie es oben bezüglich der Feinfiltereinrichtung beschrieben wurde.

In Ausführungsbeispielen kann die Reinigungseinrichtung durch den Luftstrom rotatorisch angetrieben werden. In anderen Worten kann sich die Reinigungseinrichtung durch daran angebrachte Drehflügel, Stege, Schaufeln, etc. durch die oder mit der Luftströmung drehen. In anderen Ausführungsbeispielen kann die Reinigungseinrichtung durch einen elektrischen Antrieb angetrieben werden. Der elektrische Antrieb kann beispielsweise mit dem Antrieb für den Luftstrom zusammen fallen oder aber als separater Antrieb ausgeführt sein.

In Ausführungsbeispielen kann das Lager z.B. als Gleitlager, Folienlager, Magnetlager oder Wälzlager ausgebildet sein. Beispielsweise können hier Kugellager, Nadellager, Tonnenlager, Kegelrollenlager usw. zum Einsatz kommen. Diese Lager können gegen das Eindringen von Schmutz oder Staub geschützt sein und insofern einen Staubschutz aufweisen. Das Lager kann eine Öffnung zwischen einer Innenseite der Reinigungseinrichtung und einer Außenseite der Reinigungseinrichtung bilden derart, dass sich durch den Luftstrom ein Teilluftstrom von der Außenseite der Reinigungseinrichtung zur Innenseite der Reinigungseinrichtung durch das Lager ausbildet. In anderen Worten kann ein offenes Lager zur Lagerung der Reinigungseinrichtung verwendet werden, durch das sich aufgrund des Luftstromes und der damit verbundenen Luftdruckdifferenz zwischen der Innenseite und der Außenseite der Reinigungseinrichtung im Betrieb ein stetiger Teilluftstrom ergibt. Auf diese Weise kann in Ausführungsbeispielen dafür gesorgt werden, dass sich keine groben Schmutzpartikel in dem Lager absetzten können. In weiteren Ausführungsbeispielen können ferner weitere Filtereinrichtungen in den Teilluftstrom eingebracht werden, um das Lager entsprechend vor Schmutz und Staub zu schützen.

Ausführungsbeispiele schaffen ferner ein Verfahren zum Filtern von Partikeln aus einem Luftstrom für ein Bodenpflegegerät. Das Verfahren umfasst ein Rotieren einer über ein Lager gelagerten Reinigungseinrichtung um eine in dem Luftstrom nachgeschaltete Feinfiltereinrichtung. Darüber hinaus umfassen Ausführungsbeispiele ferner ein Computerprogramm zur Durchführung eines der oben beschriebenen Verfahren, wenn das Computerprogramm auf einer programmierbaren Hardwarekomponente ausgeführt wird.

In Ausführungsbeispielen kann durch die ständige Rotation eines Filters z.B. eine bessere Saugleistungskonstanz erreicht werden. Die Abscheideleistung kann erhöht und das Zusetzen des nachgeschalteten Filters verhindert werden. Ein Nutzer muss nicht mehr in aufwändigen Verfahren und z.T. händisch den nachgeschalteten Filter reinigen. Darüber hinaus kann das Filtermedium gleichmäßig über die gesamte Nutzung aktiv bleiben. Ein Nachkauf von Filtern kann verhindert oder zumindest seltener gemacht werden. In Ausführungsbeispielen kann eine Handhabung des Gerätes dadurch, dass man nicht mit dem der Abscheideeinheit nachgeschalteten Filter in Berührung kommt, hygienischer gemacht werden.

Weitere vorteilhafte Ausgestaltungen werden nachfolgend anhand der in den Zeichnungen dargestellten Ausführungsbeispiele, auf welche die Erfindung jedoch nicht beschränkt ist, näher beschrieben.

Es zeigen schematisch:
- Fig. 1: ein Ausführungsbeispiel einer Filtervorrichtung;
- Fig. 2: einen Abscheider für einen Staubsauger mit einem Ausführungsbeispiel einer Filtervorrichtung;
- Fig. 3: eine Schnittansicht eines Staubsaugers mit einem Ausführungsbeispiel einer Filtervorrichtung;
- Fig. 4: eine Schnittansicht eines Staubsaugers mit einem Ausführungsbeispiel einer Filtervorrichtung mit einer Zwischenfiltereinrichtung;
- Fig. 5: eine weitere Schnittansicht eines Staubsaugers mit einem weiteren Ausführungsbeispiel einer Filtervorrichtung mit einer Zwischenfiltereinrichtung;
- Fig. 6: ein Ausführungsbeispiel einer Filtervorrichtung in einer weiteren Schnittansicht in der Ebene;
- Fig. 7: einen Ausschnitt eines Lagerbereichs eines Ausführungsbeispiel; und
- Fig.8: die Abdichtung der Reinigungseinrichtung gegenüber der Feinfiltereinrichtung in einem Ausführungsbeispiel.

Bei der nachfolgenden Beschreibung bevorzugter Ausführungsformen der vorliegenden Erfindung bezeichnen gleiche Bezugszeichen gleiche oder vergleichbare Komponenten.

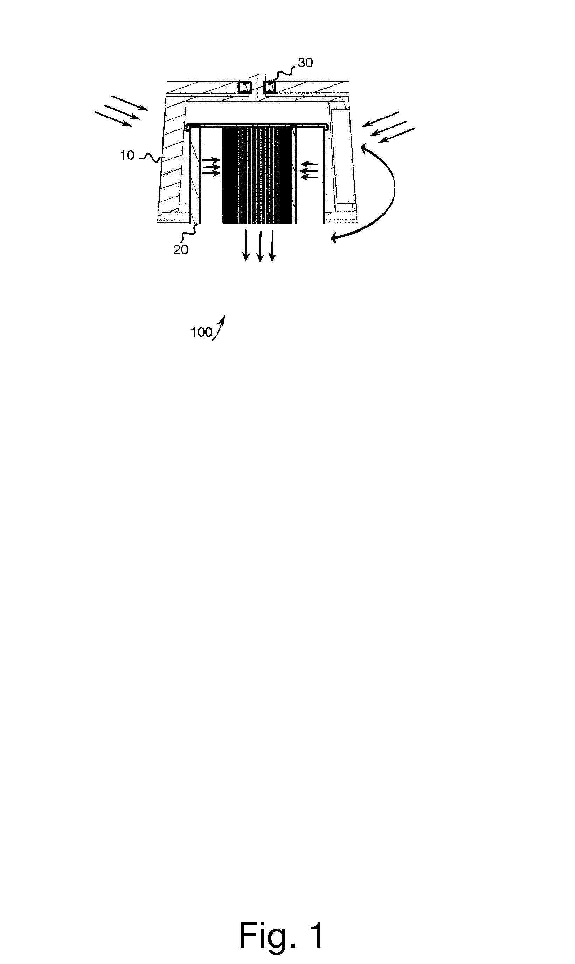

Figur 1 illustriert eine Filtervorrichtung 100 zum Filtern von Partikeln aus einem Luftstrom für ein Bodenpflegegerät. Die Filtervorrichtung 100 umfasst eine Reinigungseinrichtung 10 und eine Feinfiltereinrichtung 20. Die Feinfiltereinrichtung 20 ist der Reinigungseinrichtung 10 im Luftstrom nachgeschaltet. Der Luftstrom selbst ist in der Figur 1 mit jeweils drei parallelen Pfeilen angedeutet. Die Reinigungseinrichtung 10 ist gegenüber der Feinfiltereinrichtung 20 drehbar über ein Lager 30 gelagert. Das Lager 30 kann sich dabei in einem Gehäuse des Bodenpflegegerätes befinden, wobei die Feinfiltereinrichtung 20 mit dem Gehäuse statisch verbunden sein kann. Wie der gebogene Pfeil in der Figur 1 andeutet, kann sich die Reinigungseinrichtung 10 um die Feinfiltereinrichtung 20 herum drehen. Die Anordnung in der Figur 1 ist demnach koaxial, die sich auf einer zylindrischen Bahn bewegende Reinigungseinrichtung 10 umgibt die Feinfiltereinrichtung 20. In dem dargestellten Ausführungsbeispiel erfolgt der Luftstrom von außen nach innen. Einströmende Luft passiert zunächst die Reinigungseinrichtung 10 und nachfolgend die Feinfiltereinrichtung 20. Ausströmende Luft verlässt die Feinfiltereinrichtung 20 dann in axialer Richtung, d.h. in der Figur 1 nach unten, und strömt aus dem Inneren der Feinfiltereinrichtung 20 ab.

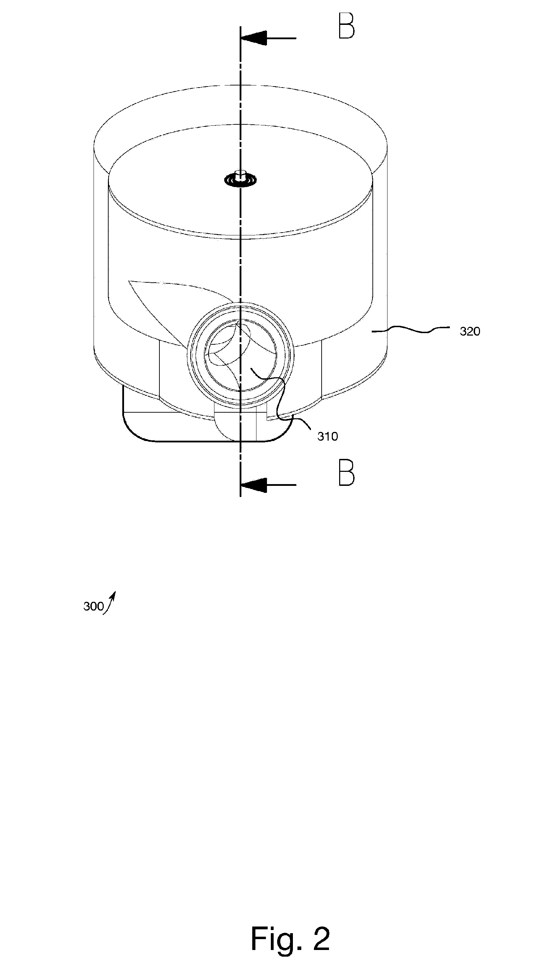

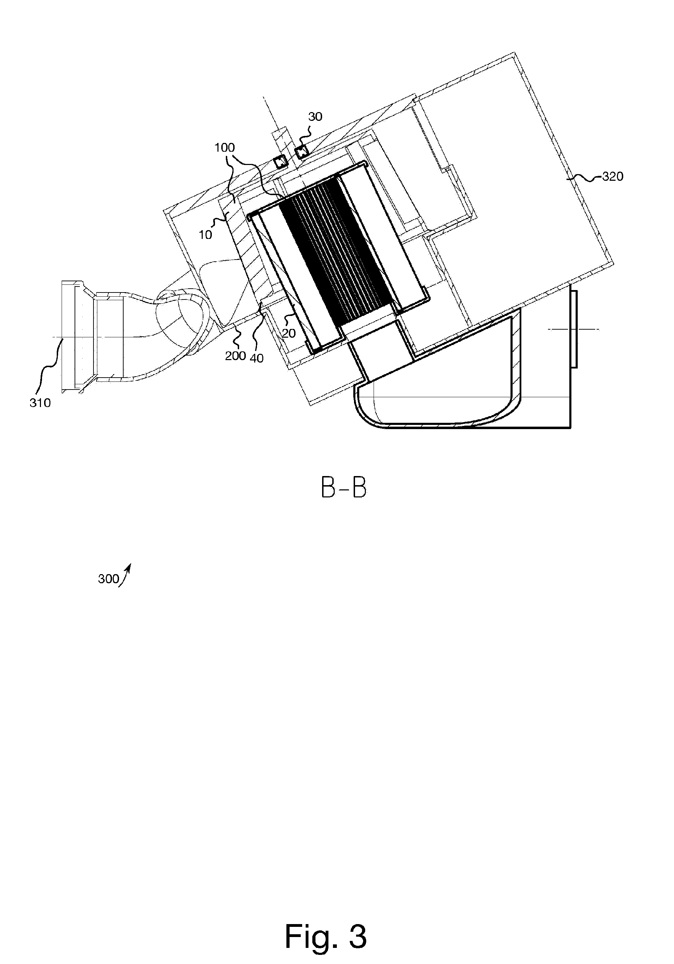

Die Figur 2 zeigt einen Abscheider 300 für ein Bodenpflegegerät, in diesem Fall für einen Staubsauger. Der Abscheider 300 umfasst einen Anschlussstutzen 310, der in das Innere eines Staubbehälters oder einer Staubbox 320 führt. In dem Staubbehälter 320 befindet sich dann in Ausführungsbeispielen die Filtervorrichtung 100. Die Figur 2 deutet ferner an, dass es sich bei dem Abscheider 300 um einen Zyklon oder Drallabscheider 300 handelt, was die Einleitung des Luftstroms tangential zu den zylindrischen Komponenten zeigt. Die Figur 2 zeigt ferner eine Schnittachse B-B bezüglich derer die Figur 3 eine Schnittansicht zeigt.

Figur 3 zeigt die Schnittansicht durch einen Staubsauger 300 mit dem Drallabscheider 200 gemäß der Figur 2 und der Filtervorrichtung 100 gemäß der Figur 1. Gleiche Komponenten sind durch gleiche Bezugszeichen bezeichnet. Die Reinigungseinrichtung 10 umgibt die Feinfiltereinrichtung 20 und ist auf einer zylindrischen oder kegelartigen Bahn drehbar über das Lager 30 gelagert. Die Reinigungseinrichtung 10 entspricht in diesem Ausführungsbeispiel einer als Drehfilter ausgebildeten Grobfiltereinrichtung, die gegenüber der Feinfiltereinrichtung 20 zum Filtern größerer Partikel ausgebildet ist, wie z.B. als rotierender Flusenfilter. Die Feinfiltereinrichtung 20 entspricht einer Filterkartusche oder einem Cartridge-Filter.

Im Betrieb reinigt sich der rotierende Drehfilter 10 durch das permanente Drehen und die dadurch entstehenden Fliehkräfte während des Saugbetriebes selbst ab. Insgesamt erhöht sich dadurch die Abscheideleistung und die Saugleistungskonstanz wird ausgedehnt. Der Antrieb des Drehfilters 10 kann durch den Luftstrom erfolgen, dazu können in Ausführungsbeispielen an dem Drehfilter 10 entsprechende Drehflügel, Paddel, Schaufeln etc. angebracht sein. In anderen Ausführungsbeispielen kann der Antrieb des Drehfilters 10 auch durch einen separaten Antrieb erfolgen. Der Antrieb des Zylinders/Kegels 10 erfolgt demnach entweder durch den vorhandenen Saugstrom oder einen separaten Antrieb, z.B. einen Elektromotor. Beispielsweise kann der Drehfilter auch durch den Elektromotor des Staubsaugers angetrieben werden. Die Reinigungseinrichtung 10 und die Feinfiltereinrichtung 20 sind in der Figur 3 gegeneinander durch eine Gleitdichtung 40 abgedichtet, die im Folgenden noch näher erläutert werden wird.

Das verwendete Filtermaterial für den Drehfilter 10 ist gut abreinigbar und gewährleistet einen guten Luftdurchlass, beispielsweise kann hier eine Metall- oder Kunststoffstruktur eingesetzt werden, die als Flusensieb fungiert. Durch geeignete Wahl des Filtermaterials, sowohl für den Drehfilter 10 als auch für die Feinfiltereinrichtung 20 kann eine weitere Verbesserung der Abscheideleistung des Systems erreicht werden, z.B. auch eine bessere Feinstaubabscheidung.

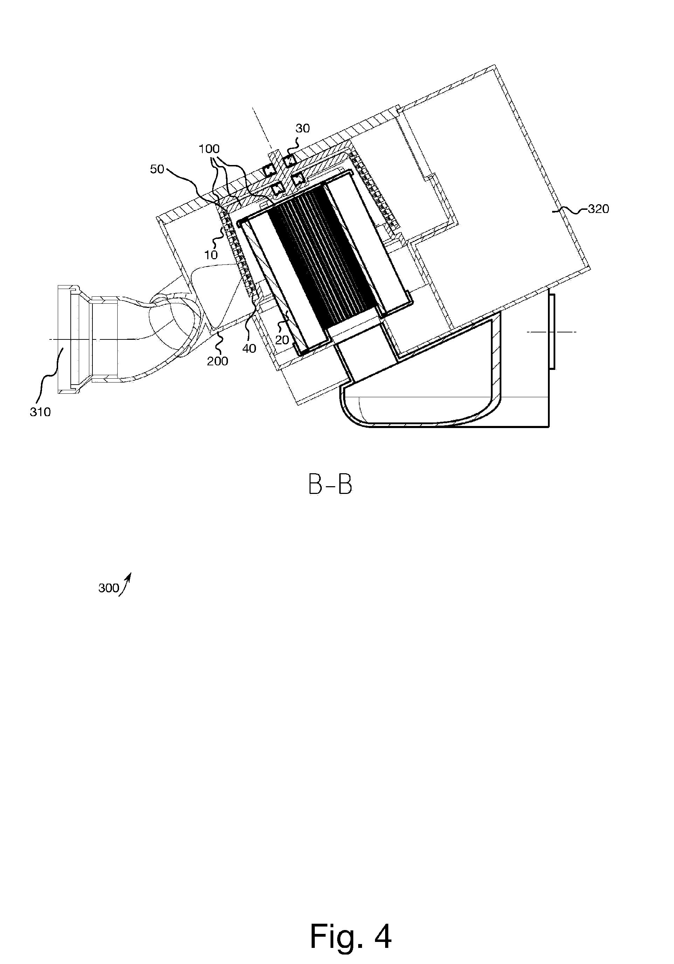

Figur 4 zeigt eine Schnittansicht eines Staubsaugers 300 mit einem weiteren Ausführungsbeispiel einer Filtervorrichtung 100. In diesem Ausführungsbeispiel umfasst die Filtervorrichtung 100 ferner eine in den Luftstrom zwischen die Reinigungseinrichtung 10 und die Feinfiltereinrichtung 20 geschaltete Zwischenfiltereinrichtung 50. Um die Feinfiltereinrichtung 20 herum befinden sich nunmehr zwei übereinander gelagerte Filter 10 und 50, die durch die Reinigungseinrichtung 10 und die Zwischenfiltereinrichtung 50 gebildet werden. Die Reinigungseinrichtung 10 ist dabei als Drehfilter ausgebildet, der sich um die innenliegende Zwischenfiltereinrichtung 50 und die noch weiter innenliegende Feinfiltereinrichtung 20 dreht. Der obere drehende Filter 20 ist mit einem grobporigen Filtermaterial versehen, so dass dieser eine ständige Abreinigung gewährleistet. Der darunter liegende festsitzende Filter 50 der Zwischenfiltereinrichtung 50 verfügt dagegen über ein feinporigeres Filtermaterial, das die Abscheideleistung des Systems erhöht. Noch feinporigeres Filtermaterial kann dann für die Feinfiltereinrichtung 20 verwendet werden. Die Lagerung 30 ist in dem illustrierten Ausführungsbeispiel doppelt ausgeführt, um eine entsprechende Leichtgängigkeit des Drehfilters 10 zu ermöglichen. Auf die Lagerung 30 wird im Folgenden noch detaillierter eingegangen werden.

In weiteren Ausführungsbeispielen kann die Reinigungseinrichtung 10 ein Reinigungselement für die Feinfiltereinrichtung 20 umfassen, wobei das Reinigungselement ausgebildet ist, um durch Rotieren um die Feinfiltereinrichtung 20 herum Partikel von der Feinfiltereinrichtung 20 zu entfernen. Das Reinigungselement kann dabei als Borste, Lippe oder Paddel ausgebildet sein. Die Reinigungseinrichtung 10 kann dabei, wie bereits oben beschrieben, durch den Luftstrom oder durch einen separaten Antrieb angetrieben werden. Generell kann die Reinigungseinrichtung 10 ausgebildet sein, um nach einem Abschalten des Luftstroms um die Feinfiltereinrichtung 20 herum zu rotieren, beispielsweise mit dem abklingenden Luftstrom oder durch kurzes Einschalten eines separaten Antriebs nach Abschalten des Bodenpflegegerätes 300.

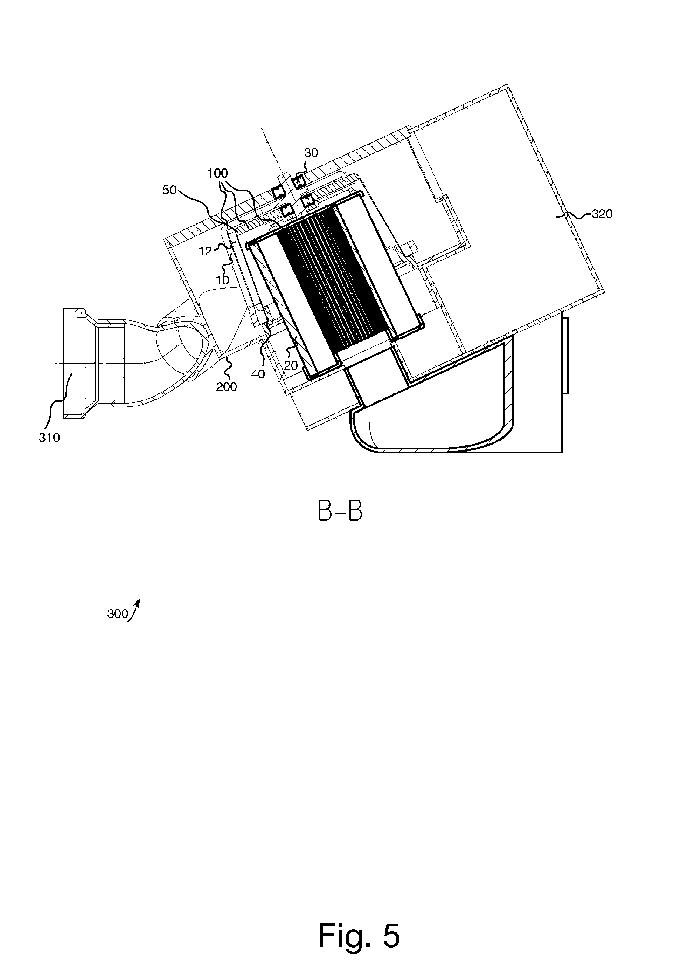

Bei einem Aufbau von zwei übereinander gelagerten Filtern 10, 50 ist zudem der Einsatz eines auf der Innenseite des oberen drehenden Filters angebrachten Abstreifers, z.B. ausgebildet als Borste, Gummilippe, Paddel o.ä. zur ständigen Abreinigung des unteren festsitzenden Filters 50 möglich. Ein solches Ausführungsbeispiel illustriert die Figur 5. Figur 5 zeigt eine Schnittansicht eines Staubsaugers 300 mit einem weiteren Ausführungsbeispiel einer Filtervorrichtung 100 mit einer Zwischenfiltereinrichtung 50. In diesem Ausführungsbeispiel ist die Reinigungseinrichtung 10 um die Zwischenfiltereinrichtung 50 herum drehbar und weist ferner ein Reinigungselement 12, in Form einer Gummilippe, für die Zwischenfiltereinrichtung 50 auf. Das Reinigungselement 12 ist ausgebildet, um durch Rotieren um die Zwischenfiltereinrichtung 50 herum Partikel von der Zwischenfiltereinrichtung 50 zu entfernen. Die Reinigungseinrichtung 10 kann dabei ausgebildet sein, um nach einem Abschalten des Luftstroms um die Zwischenfiltereinrichtung 50 zu rotieren, um ein direktes Wiederansaugen gelöster Partikel zu verhindern. Die Reinigungseinrichtung 10 kann dabei als Drehfilter 10 mit ein oder mehreren innenliegenden Reinigungselementen 12 oder auch ohne Filter, d.h. durch ein oder mehrere drehbare Reinigungselemente 12 ausgebildet sein, z.B. als grobmaschiger Käfig mit innenliegendem Reinigungselement 12.

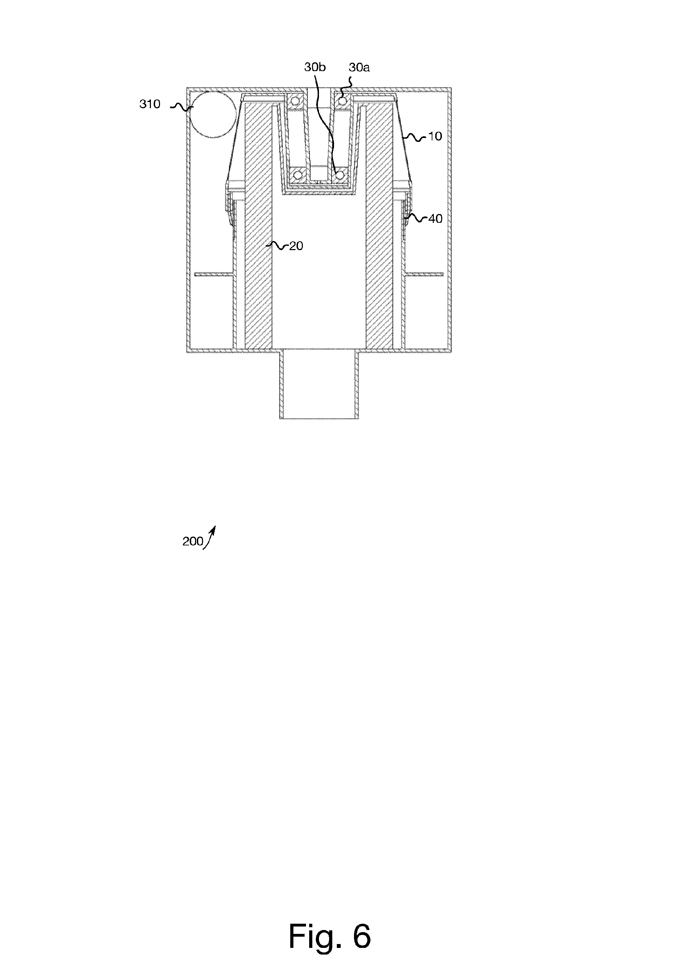

Die Figur 6 zeigt ein Ausführungsbeispiel einer Filtervorrichtung 100 in einer weiteren Schnittansicht in der Ebene. Das Ausführungsbeispiel der Figur 6 zeigt den Abscheider 200 in einer Projektion mit den bereits oben beschriebenen Komponenten. Die Figur 6 illustriert zwei Lager 30a und 30b, die zur Lagerung des Drehfilters 10 verwendet werden. Der Anschlussstutzen 310 ist als Tangentiallauf ausgebildet und hält so den Drehfilter 10 durch den Luftstrom in Drehung. Die abgereinigte Luft wird dann in der Figur 6 nach unten abgesaugt. Der innenliegende Feinfilter 20 weist eine Dichtkappe auf, um etwaigen Schmutz oder Staub von den Lagern 30a, 30b fernzuhalten.

Die Lagerung 30a, 30b ist so ausgebildet, dass kein Schmutz oder nur wenig Schmutz in das Lagersystem gelangen kann. Wie die oben erläuterten Ausführungsbeispiele bereits zeigen können beispielsweise ein oder mehrere Lager 30, 30a, 30b vorgesehen sein, um einen möglichst geringe Unwucht zu erreichen und um eine entsprechende Leichtgängigkeit der Reinigungseinrichtung 10 zu gewährleisten. Darüber hinaus können Lager mit geringer Masse und Reibung eingesetzt werden, um die Drehung der Reinigungseinrichtung 10 nicht zu behindern. Ein in Ausführungsbeispielen eingesetztes Lager 30, 30a, 30b kann z.B. als Gleitlager, Folienlager, Magnetlager oder Wälzlager ausgebildet sein. Die Lager werden vorzugsweise nicht im Unterdruckbereich eingesetzt und damit nicht mit Staub beaufschlagt, um eine aufwendige und reibungsbehaftete Abdichtung der Lager zu vermeiden. In manchen Ausführungsbeispielen kann der Lagerbereich 30, 30a, 30b mit einer zusätzlichen Abdichtung versehen sein. Auch können hier Abweisrippen eingesetzt werden, die, ähnlich derer an der Dichtung, vorgesehen werden, um einen Staubeintrag in die Lager zu vermeiden. Die Lager 30, 30a, 30b können somit einen Staubschutz aufweisen.

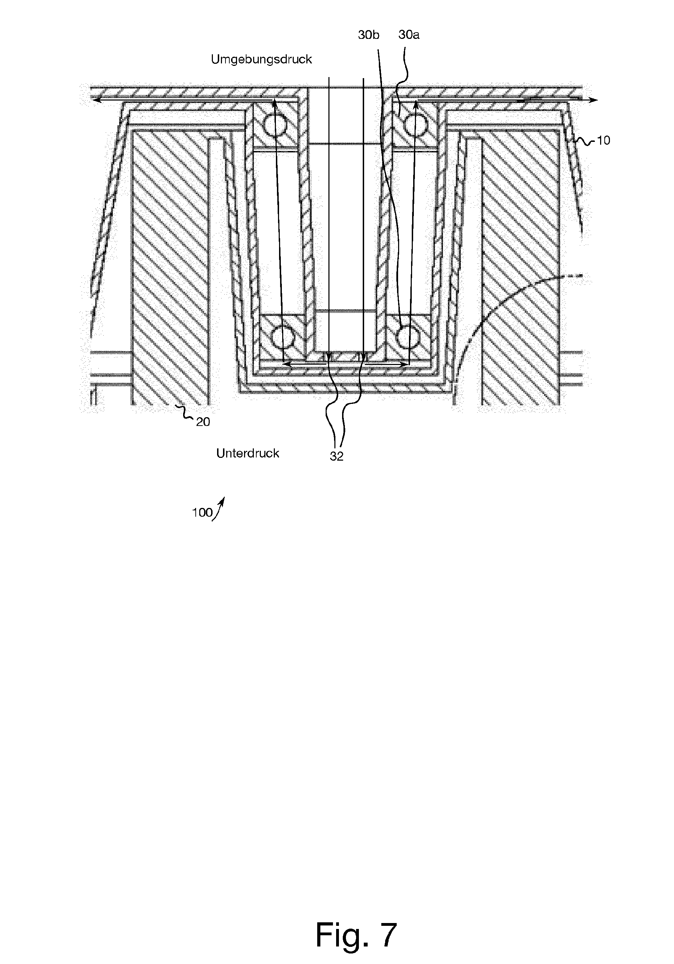

Figur 7 zeigt eine Vergrößerung des Lagerbereichs mit den Lagern 30a und 30b aus dem Ausführungsbeispiel der Figur 6. Das Ausführungsbeispiel zeigt eine offene Lagerführung, wodurch etwas Falschluft durch die Lager von außen in den Abscheidebereich angesaugt wird, was sicher verhindert, dass Schmutz vom Abscheidebereich in den Lagerbereich gelangt. Die Figur 7 illustriert zwei Öffnungen 32 durch die die Falschluft vom Umgebungsdruckbereich in den Unterdruckbereich strömen kann. Diese Öffnungen 32 geben einen Weg zur Umgebung frei und können gegen Verstopfung geschützt sein, z.B. durch ein Dach, ein Staubvlies, Schaumstoff, etc. Um Staubeintrag weitgehend zu vermeiden, kann zusätzlich vor die Lager 30a, 30b auf Umgebungsdruckseite ein Flusensieb vorgeschaltet werden. In anderen Worten haben die in diesem Ausführungsbeispiel eingesetzten Lager 30a, 30b eine Öffnung zwischen einer Innenseite der Reinigungseinrichtung 10 und einer Außenseite der Reinigungseinrichtung 10 derart, dass sich durch den Luftstrom ein Teilluftstrom von der Außenseite der Reinigungseinrichtung 10 zur Innenseite der Reinigungseinrichtung 10 durch das Lager 30 ausbildet. Dieser Teilluftstrom ist in der Figur 7 durch die Pfeile angedeutet.

Generell kann in Ausführungsbeispielen über ein oder mehrere Öffnungen 32, durch Ausnutzen des im System vorherrschenden Unterdrucks, Luft aus der Umgebung abgesaugt werden, die dafür sorgt, dass die ungedichteten, reibungsarmen Lager 30a, 30b staubfrei bleiben.

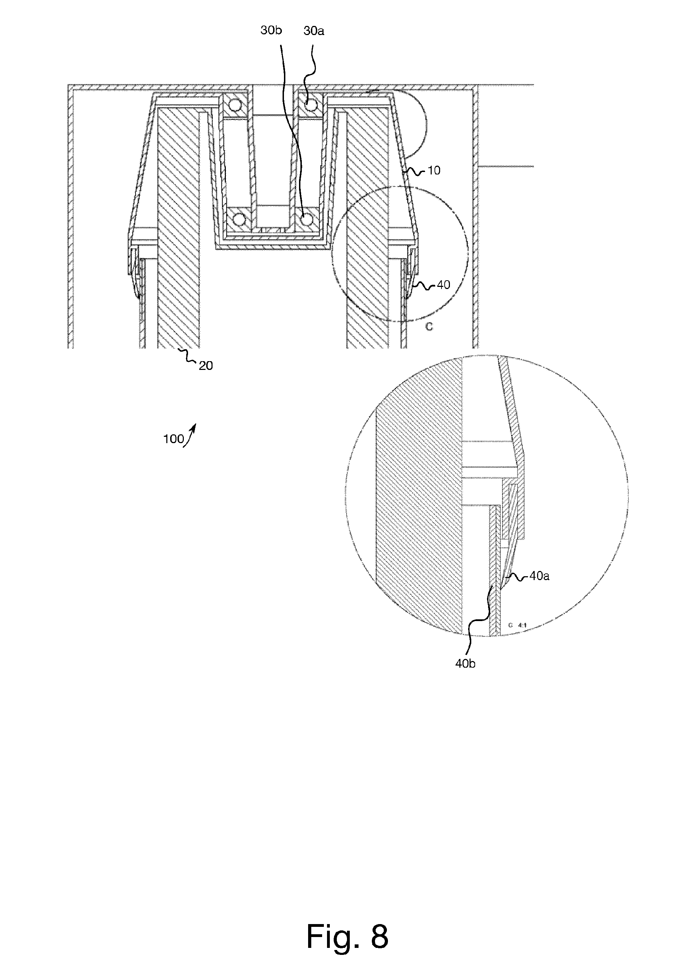

Figur 8 zeigt die Dichtung 40 der Reinigungseinrichtung 10 gegenüber der Feinfiltereinrichtung 20 in einem Ausführungsbeispiel. Die Reinigungseinrichtung 10 und die Feinfiltereinrichtung 20 sind gegeneinander durch eine Gleitdichtung 40 abgedichtet, wobei die Gleitdichtung 40 zwei Gleitkomponenten 40a und 40b aufweist, wobei sich eine Gleitkomponente 40a mit der Reinigungseinrichtung 10 dreht und die andere Gleitkomponente 40b mit der Feinfiltereinrichtung 10 verharrt. In dem in der Figur 8 gezeigten Ausführungsbeispiel befindet sich ein Gleitring 40b auf der starren Seite und eine Dichtlippe 40b auf der beweglichen Seite. Die Gleitdichtung 40 kann auch als Labyrinth-Dichtung ausgeführt sein. Als Dichtung 40 des Systems kann hier die Materialpaarung Stahl, als Stahlring 40a am rotierenden Filter 10, und Teflon, z.B. als Teflonfolie als feststehende Abdichtung 40b, eingesetzt werden, um die Reibung und somit den Verschleiß durch die Rotation möglichst gering zu halten. Andere Paarungen sind in weiteren Ausführungsbeispielen ebenfalls möglich.

Im vorliegenden Ausführungsbeispiel liegt die Dichtung 40, 40a, 40b radial um einen Zylinder an. Sie kann entweder drehend am rotierenden Filter 10 angebracht sein oder stehend am ruhenden Gleitpartner. Die Dichtung wird durch den anliegenden Unterdruck automatisch abgedichtet und ist unterdruckstabil ausgeführt. Beispielsweise kann auch nur eine Spitze am Zylinder anliegen, um die Reibung so gering wie möglich zu halten.

Durch einen Abrieb der Dichtung 40 wird die Dichtfunktion nicht zwangsläufig negativ beeinflusst. Darüber hinaus liegt die Dichtung weit genug über einer Staubablagerung, so dass Beeinflussungen durch Schmutz gering sind. Die Dichtung 40 kann selbstreinigend ausgeführt sein. Z.B. kann durch die nach unten gerichtete Lage verhindert werden, dass Schmutz auf der Dichtung 40 anhaftet. Die Abreinigung der Dichtung kann durch ein Labyrinth oder kleine Rippen weiter verbessert werden.

Diese Rippen können wie ein Lüfterrad wirken und können den Schmutz so von der Dichtfläche weg fördern. Als Maß für die Abdichtung kann das Staubrückhaltevermögen des am Drehfilter eingesetzten Filtermediums dienen, da die Dichtung 40 nicht besser als das Filtermedium zu sein braucht. Hierzu können z.B. auch Nocken oder Vertiefungen an der Dichtlippe 40a oder auch am Dichtpartnerteil 40b angebracht werden mit einem definierten Abstand gleichwertig zum Rückhaltevermögen des Filters, welche die Reibung der Dichtung 40 noch weiter reduzieren können. Der Dichtpartner 40b besteht ebenfalls aus einem reibungsmäßig günstigen Material. Die Oberfläche der beiden Reibungsteile kann sehr glatt sein oder aus einer reibungsgünstigen Oberflächenstruktur bestehen. Bevorzugt ist ein geschliffener Metallring, welcher gleichzeitig für eine gute Passungsgenauigkeit sorgt. Als Material der Dichtung 40 kann z.B. reines Teflon oder teflongefülltes Kunststoffmaterial verwendet werden. Eine Dichtungskomponente 40a, 40b kann als Spritzgußteil oder als Folie ausgebildet sein. Insofern kann die Gleitdichtung 40 auch ein oder mehrere Rippen aufweisen, die Schmutz von einer Dichtfläche weg fördert. Insofern ist es möglich, dass die Dichtungskomponenten 40a, 40b eine nicht geschlossene Oberfläche bilden, d.h. beispielsweise Ausnehmungen in Form von Lücken aufweisen. Dies kann dazu dienen die Reibung zwischen den Komponenten gering zu halten und gleichzeitig eine Dichtwirkung zu erzielen, die der der Reinigungseinrichtung 10 in etwa gleich kommt.

Ausführungsbeispiele schaffen darüber hinaus ein Verfahren zum Filtern von Partikeln aus einem Luftstrom für ein Bodenpflegegerät 300. Das Verfahren umfasst ein Rotieren einer über ein Lager 30 gelagerten Reinigungseinrichtung 10 um eine in dem Luftstrom nachgeschaltete Feinfiltereinrichtung 20.

Nachdem in modernen Bodenpflegegeräten 300 auch computergesteuerte Komponenten vorkommen, können Ausführungsbeispiele auch ein Computerprogramm zur Durchführung eines der oben beschriebenen Verfahren schaffen, wenn das Computerprogramm auf einer programmierbaren Hardwarekomponente ausgeführt wird. Beispielsweise wenn die Reinigungseinrichtung 10 nach einem Abschalten des Luftstroms um die Feinfiltereinrichtung 20 herum zu rotiert, so kann dies durch Ansteuerung durch eine entsprechende Hardwarekomponente erfolgen, auf der ein entsprechendes Computerprogramm ausgeführt wird.

Das beschriebene Verfahren ist in dem Ausführungsbeispiel z.B. mittels eines Mikrocontrollers, eines Mikroprozessors o. ä. implementiert. Insofern umfasst das Ausführungsbeispiel auch ein Computerprogramm zur Durchführung eines der oben genannten Verfahren, wenn das Computerprogramm auf einer programmierbaren Hardwarekomponente, wie z.B. einem Computer oder einem Prozessor, ausgeführt wird.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blue-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbaren Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Reinigungseinrichtung
- 12: Reinigungselement
- 20: Feinfiltereinrichtung
- 30: Lager
- 30a: Lager
- 30b: Lager
- 32: Öffnungen
- 40: Dichtung
- 40a: Dichtungskomponente
- 40b: Dichtungskomponente
- 50: Zwischenfiltereinrichtung
- 100: Filtervorrichtung
- 200: Abscheider
- 300: Bodenpflegegerät
- 310: Anschlussstutzen
- 320: Staubbox

## Patentansprüche

1. Eine Filtervorrichtung (100) zum Filtern von Partikeln aus einem Luftstrom für ein Bodenpflegegerät (300), mit einer Reinigungseinrichtung (10) und einer Feinfiltereinrichtung (20), wobei die Feinfiltereinrichtung (20) der Reinigungseinrichtung (10) im Luftstrom nachgeschaltet ist und wobei die Reinigungseinrichtung (10) gegenüber der Feinfiltereinrichtung (20) drehbar über ein Lager (30) gelagert ist.

2. Die Filtervorrichtung (100) gemäß Anspruch 1, bei der die Reinigungseinrichtung (10) einer Grobfiltereinrichtung entspricht, die gegenüber der Feinfiltereinrichtung (20) zum Filtern größerer Partikel ausgebildet ist.

3. Die Filtervorrichtung (100) gemäß einem der vorangehenden Ansprüche, bei der die Reinigungseinrichtung (10) ein Reinigungselement für die Feinfiltereinrichtung (20) umfasst, das ausgebildet ist, um durch Rotieren um die Feinfiltereinrichtung (20) herum Partikel von der Feinfiltereinrichtung (20) zu entfernen.

4. Die Filtervorrichtung (100) gemäß Anspruch 3, bei der die Reinigungseinrichtung (10) ausgebildet ist, um nach einem Abschalten des Luftstroms um die Feinfiltereinrichtung (20) herum zu rotieren.

5. Die Filtervorrichtung (100) gemäß einem der vorangehenden Ansprüche, wobei die Reinigungseinrichtung (10) und die Feinfiltereinrichtung (20) gegeneinander durch eine Gleitdichtung (40) abgedichtet sind.

6. Die Filtervorrichtung (100) gemäß Anspruch 5, wobei die Gleitdichtung (40) als Labyrinth-Dichtung, unterdruckstabil und/oder unter Verwendung von Stahl und Teflon ausgeführt ist.

7. Die Filtervorrichtung (100) gemäß Anspruch 5, wobei die Gleitdichtung (40) ein oder mehrere Rippen aufweist, die Schmutz von einer Dichtfläche weg fördert.

8. Die Filtervorrichtung (100) gemäß einem der vorangehenden Ansprüche, die ferner eine in den Luftstrom zwischen die Reinigungseinrichtung (10) und die Feinfiltereinrichtung (20) geschaltete Zwischenfiltereinrichtung (50) umfasst.

9. Die Filtervorrichtung (100) gemäß Anspruch 8, wobei die Reinigungseinrichtung (10) um die Zwischenfiltereinrichtung (50) herum drehbar ist und ferner ein Reinigungselement (12) für die Zwischenfiltereinrichtung (50) umfasst, das ausgebildet ist, um durch Rotieren um die Zwischenfiltereinrichtung (50) herum Partikel von der Zwischenfiltereinrichtung (50) zu entfernen, und/oder bei der die Reinigungseinrichtung (10) ausgebildet ist, um nach einem Abschalten des Luftstroms um die Zwischenfiltereinrichtung (50) zu rotieren.

10. Die Filtervorrichtung (100) gemäß einem der vorangehenden Ansprüche, wobei die Reinigungseinrichtung (10) durch den Luftstrom rotatorisch antreibbar ist.

11. Die Filtervorrichtung (100) gemäß einem der vorangehenden Ansprüche, wobei die Reinigungseinrichtung (10) durch einen elektrischen Antrieb anttreibbar ist.

12. Die Filtervorrichtung (100) gemäß einem der vorangehenden Ansprüche, wobei das Lager (30) als Gleitlager, Folienlager, Magnetlager oder Wälzlager ausgebildet ist oder einen Staubschutz aufweist.

13. Die Filtervorrichtung (100) gemäß einem der vorangehenden Ansprüche, wobei das Lager (30) eine Öffnung zwischen einer Innenseite der Reinigungseinrichtung (10) und einer Außenseite der Reinigungseinrichtung (10) bildet derart, dass sich durch den Luftstrom ein Teilluftstrom von der Außenseite der Reinigungseinrichtung (10) zur Innenseite der Reinigungseinrichtung (10) durch das Lager (30) ausbildet.

14. Ein Verfahren zum Filtern von Partikeln aus einem Luftstrom für ein Bodenpflegegerät, mit
Rotieren einer über ein Lager (30) gelagerten Reinigungseinrichtung (10) um eine in dem Luftstrom nachgeschaltete Feinfiltereinrichtung (20).

15. Ein Computerprogramm zur Durchführung des Verfahrens gemäß Anspruch 14, wenn das Computerprogramm auf einer programmierbaren Hardwarekomponente ausgeführt wird.
